# EUROPEAN PATENT SPECIFICATION

(11) **EP 2 240 837 B1**
(45) Date of publication and mention of the grant of the patent: **26.10.2011**
(21) Application number: 08854432.5
(22) Date of filing: 28.11.2008
(51) Int. Cl.: G05D 23/19, F24D 19/00, F16K 31/04, F16K 31/53, F16K 37/00

(54) **HEATING UNITS VALVE CONTROL DEVICE**
VETILSTEUERUNG FÜR HEIZGERÄTE
DISPOSITIF DE COMMANDE DE SOUPAPES D'UNITÉS DE CHAUFFAGE

(30) Priority: 28.11.2007 CZ 200719444 U
(43) Date of publication of application: 20.10.2010
(73) Proprietor: Amicus SK, S.R.O., 909 01 Skalica (SK)
(72) Inventor: SPICKA, Jaroslav, Ing., CSc., 549 01 Nové Mesto Nad Metují (CZ); SULC, Vladimír, Ing., 507 43 Sobotka (CZ)
(74) Representative: Porubcan, Robert
(86) International application number: PCT/IB2008/055012
(87) International publication number: WO 2009/069104

(56) References cited:
- EP-B1- 0 961 958
- US-A- 5 137 051
- US-A1- 2005 184 265

## Description

### FIELD OF INVENTION

The present invention relates to a device to control the valves of the heating units, mainly to programmable cordless control of the valves of the radiator heating units.

### PRESENT TECHNOLOGY STATUS

Regulation of the heat capacity of the heating elements, radiators is implemented by simple nonprogrammable thermostatic valves, valves with local programming or possibly programming via wiring or cordless. Disadvantage of such nonprogrammable valves is the need to change the temperature manually, for example when changing the temperature level at night. The valves with local programming of each valve usually include incommodious way of setting and unable to control the heating system centrally (f.e. switching off).

Wiring control demands installation of the control conductors to each heating unit. Up to the present known cordless systems are controlled by a central unit with relatively small amount of functions and limited amount of the heating units.

Most of the systems do not provide the user neither with the information about how open the valves of the heating unit are nor the immediate heat output of the unit. Other disadvantages are the production costs concerning their difficult construction. The existing known solutions are described in patent documents GB2216293, EP0961958, DE3642113, DE 3401154, DE10 2004060, EP 1033640Al and DE3515590. The published solutions and inventions such as EP 0961958, DE3515590, US 5.137.051 use to show the actual valve position the electronic depictive board, mainly LCD display which shows the position calculated by the electronic head. Such adjustment the device more complicated, increases the production costs and, in operation, increases the energy consumption since first the position is scanned electronically, the data is processed and shown on the display. In contrast, it is more desired to minimalize the energy consumption of the device, since for the cordless technology the only feeding source are the batteries inserted into the head. However, to obtain better visibility under impaired light conditions, the LCD display involves indirect lighting which is more energy disadvantageous.

Common mechanical transmission systems used in up to now known valves, devices to control the valves of the heating units produced vibrations and noise. Although, the appointed absolute noise level is not high, this noise is perceived very intrusively, particularly when the control valve is situated in a quiet room such as bedroom. Therefore required arrangement is such to muffle the noise and vibrations raised by the metal structure of the heating unit valves simply and reliably.

### BACKGROUND TO INVENTION

The invention relates to a device to control the valves of the heating units made of the valve head including a body with radio transmitter and receiver of the control signals from the central control unit by cordless thermostat; where to the body is fixed a configuration of electric engine and a case with two-axial transmission which pinion meshes together into the internal toothing of the output bowl- shaped rack pinion with the rare support from the outer side; this support crosses the body through a hole situated in area adjusted to serve as a connection to the valve of the heating unit. Disadvantages mentioned in PRESENT TECHNOLOGY STATUS are eliminated significantly by the presented invention of which bedrock is based on the fact that the outlet rack pinion contains on its circumference a rotary fitted collar secured against axial movement. On the outer side of this collar is a radial peak adjusted to cooperate with the axial outlet rack pinion placed from its outer front side where the body contains on its front inner side a peak cooperating with the axial peak of the outlet rack pinion in its marginal position at the maximum pullout of the threaded collar pin, matching to functional position of fully open heating unit valve whereas the external marginal area of the collar indicates the valve condition.

On its outer side, the collar may include a radial flanging with a protruded radial peak creating the end stop for external front wall of the output rack pinion where, in assembled position, is the output rack pinion and the collar secured against axial movement by shaped push-in and lock joint ("click clack ready"). By calibration of the valve status indicator, the angular position of the collar against the outlet rack pinion corresponds to the assembling position of the collar against outlet rack pinion and to processing and assembling allowances of the valve head of the heating units.

By assembling, the collar is fixed into a position in which its radial peak is turned from about 130 ° to 180° against the axial peak of the outlet rack pinion. After the device is placed and fixed onto the control valve, the calibration is made in the means of device settings, principally the collar indicator in respect to specific conditions and cooperation with the control electronics. The threaded pin slides up to the valve spindle while the collar stops on the peak on the front side of the valve head body. In such position the collar does not move together with the rotary outlet rack pinion of the transmission and the indicator of the fully closed valve is shown through the transparent small window. The control electronics read the source power of the electric motor while the current in a position of fully pressed valve spindle grows irregularly (jumps up). At this moment the control electronics evaluates such situation as a valve closed position. By the following backward turn of the rack pinion is the collar, due to friction, moved together with the outlet wheel of the transmission and shows the current position.

The radio transmitter and receiver aerial can be created on the joint of the board and the control electronics. The body comprises of a basic part to which is fixed a tip-up cover of the source from the bottom part and back part with the removable cover consisting of radio transmitter and receiver fitted on to control electronics board, where the basic part of the body is filled up from the upper part by transparent small window enabling the visual checking of the valve position.

Among the principle advantages of this invention are, first of all, simplicity and low production costs. The indicator showing the valve condition is, comparing to LCD display with control processor, made of simple and reliable mechanical part - a collar on the outlet rack pinion of the transmission.

In a suitable configuration, the electric engine pinion may mesh into the rack pinion made of a material with s low flexibility module. Suitable is material with hardness lower than 90 Shore A, possibly rubber, EPA or PUR plastic, or softened PVC.

Since the first transmission wheel is loaded the less, the use of a soft, elastic material does not worsen the transmission life and muffles the noise and vibrations well. This wheel may consist of the same material in the whole core as well as in the toothed part. Using flexible, soft wheel at the transmission access shows good results also in cooperation with soft engine siting in form of flexible for example rubber and/or expanded plastic circlet to which is the engine fixed on to the gear box.

The thrust is made by push-in and lock collets of which peaks push down on the back part of the electric engine. The above mentioned connection of the electric engine and the box allows the transmission of the electric engine moment. At the starting, the turns of the electric engine are controlled by the control electronic board until the gradual interaction is achieved.

Flexible plastic or rubber material of the first wheel of the transmission as well as the turn regulation of the electric engine of the valve head allow to minimalize vibrations and noise of the head engine. The result is an efficient lowering of the device noisiness.

Temperature mode of individual heating units is set at a distance by the central control unit consisting of computing and displaying unit with the high amount of possible functions such as a personal computer with software and hardware adapted to bidirectionally cordless data communication. At a distance, it is possible to change the temperature mode of the heating units either gradually or all together and to indicate the value of the valve openness. In individual areas, the temperature measurements and valve head control is realized by cordless thermostats by means of which is the data between the central control unit and single control valve heads communicated.

### DESCRIPTION OF DRAWINGS

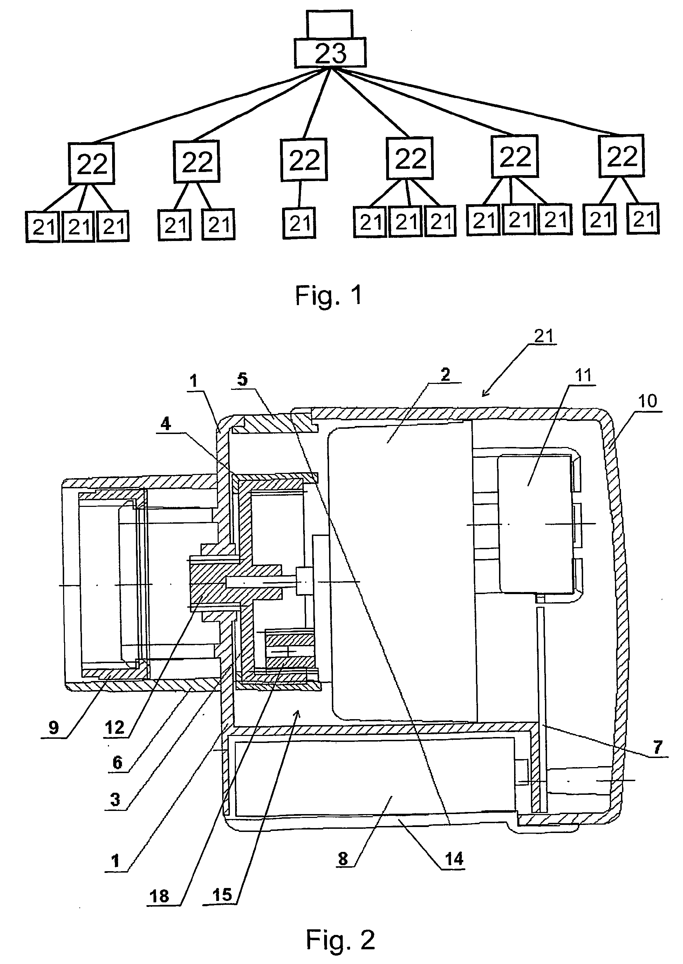

The aspects of the device will become apparent from the following example of its possible version when taken in combination with the accompanying drawings and subsequent description of such version. Figure 1 shows schematically the cordless connection between single devices to control the radiator valves (valve head) and central control unit by means of cordless thermostats.

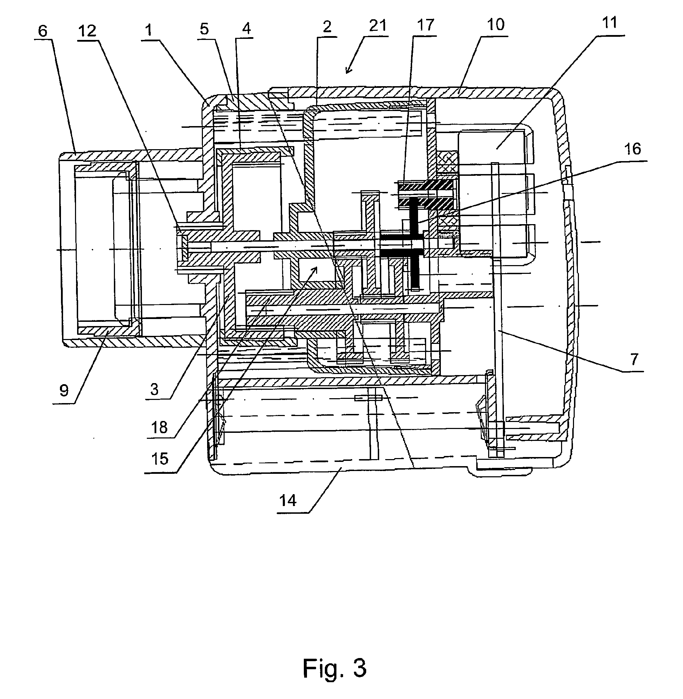

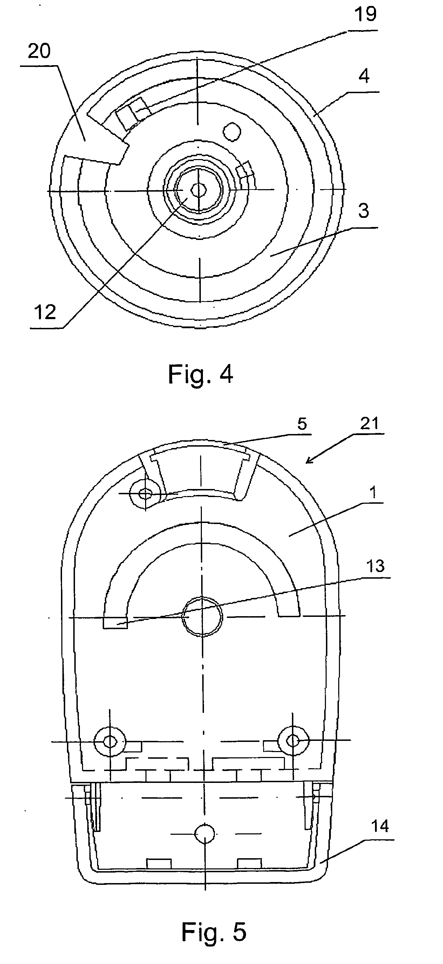

Figure 2 depicts the valve head in a vertical lengthwise broken-out section, Referring to Figure 2, Figure 3 shows the two-axial transmission with its rack pinion and electric engine. Figure 4 is a frontal view at the outer side of the outlet rack pinion with the central threaded collar pin and axial peak. The rack pinion contains on its circumference a rotary fitted collar of which, on the outer side a radial peak is situated and adjusted to cooperate with the axial peak of the outlet rack pinion.

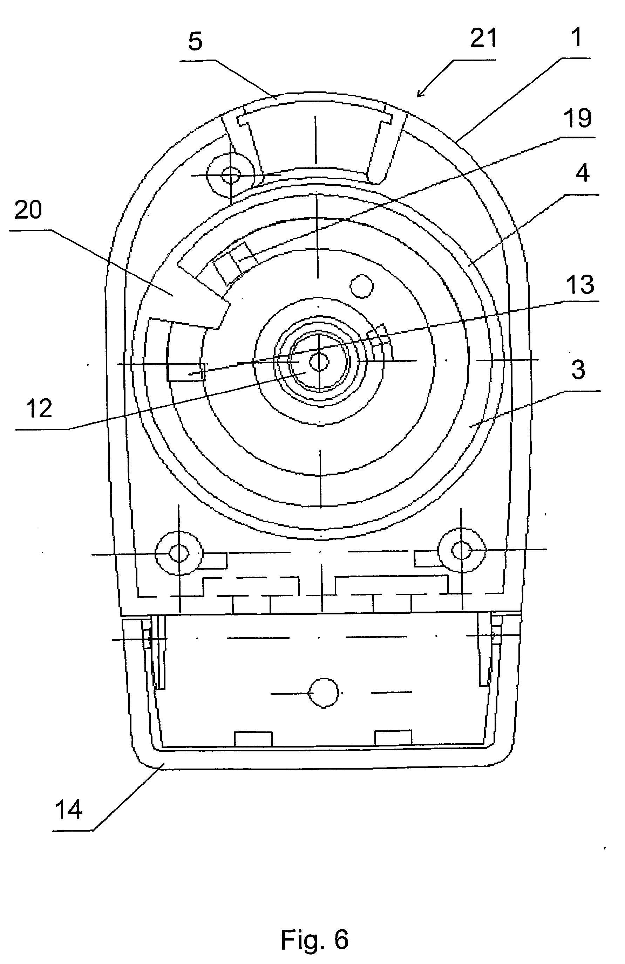

Figure 5 represents a frontal view of the the front side of the valve body where the peak cooperates with the axial peak of the outlet rack pinion in his marginal position at the maximum slide - out of the threaded collar pin. Figure 6 is a schematic diagram of outer side of the transmission output rack pinion cooperating with the axial peak, radial collar peak situated on this transmission wheel and a peak on the front wall of the valve head.

### EXAMPLE OF APPLICATION

The device to control the valves of the heating units consists of a plastic body 1 of the valve head 21 to which is flexibly connected the configuration of the electric engine 11 and two-axial transmission 15 placed in a gear box 2. The first rack pinion 16 of the transmission 15 meshes together into the pinion 17 of the electric engine 11; made of a flexible material- soft plastic with the hardness 80 Shore A.. Such material remarkably muffles the noise and vibrations of the electric engine 11.

Outlet pinion 18 of the transmission 15 meshes together into the internal toothing of outlet plastic rack pinion 3 in a shape of a bowl, which has in the middle part on its outer side an threaded collar pin 12, tighten on the corresponding screw in the frontal part of the body 1 of the valve head 21. After placing the head 21 on the valve of the heating unit the external threaded collar pin 12 fits into the valve spindle. The outer side of the bowl of the outlet rack pinion 3 includes in the area of its external Fitted on the outlet rack pinion 3 by push-in and lock joint is a plastic rotary collar 4 including on its outer cylindric surface an indicator of the heating unit valve condition comprising of for example graphically printed either continuously or irregularly narrowing belt or possibly alphanumeric signs. The indicator is readable through a transparent small window 5 placed in the upper part of the valve head 21 body 1.

The rotary collar 4 comprises a radial medially oriented peak 20 which cooperates with the axial peak 19 of the outlet rack pinion 3 and determinates the maximum extend of the outlet rack pinion 3 rotation at about 324 °. This corresponds to the length of about 2mm of rotation screw motion of the outlet rack pinion 3 in the thread on the front wall of the valve head 21 body 1. Since the rotary collar 4 is drifted by the outlet rack pinion 3 motions, the same angle of 324 ° correspondents also to the angular position of the indicator placed on the outer cylindric surface of the rotary collar 4. If the angular position was bigger the parting plane of the indicator would exceed the border of the transparent small window 5 in the valve head 21 body 1 (the value 324 ° is set according to a specific lead of thread on the threaded collar pin 12 of the outlet rack pinion 3 and the width of the transparent small window 5, this angle must be less than 360 °.)

On the inner side of the valve head 21 body 1 is a peak 13 creating emergency stop end to limit the axial movement of the outlet rack pinion 3, in case of undesirable excessive movement of this outlet rack pinion 3 towards the inner wall of the valve head 21 body 1. To enable shortening of the valve head 21 for about 1 mm, the inner wall of the valve head 21 body 1 comprises a mortise (with continuous deepening) in a helix-shape in equal lead to the thread on the threaded collar pin 12 of the outlet rack pinion 3. This mortise reaches up to the peak 13 on the inner front side of the body 1 where the deepest point is. The threaded collar pin comprises in its middle outer part of an embedded, inserted metal pin which by its rotation against valve spindle lowers the friction and its wear.

Fixed to the valve head 21 body 1 from the bottom part is a plastic tip-up cover 14 of the source 8 (battery) and from the back side a plastic removable cover 10 to which, the board 7 with the control electronics and radio receiver with the aerial created by a figure on surface joint of the board 7, is fitted. The valve head 21 is fixed to the valve of the heating unit through a safety nut 9.

The electric signal to device calibration is received from the central control unit 23 via corresponding cordless thermostat 22. The electric engine 11 of the device gets started and the outlet rack pinion 3 rotates until the valve is completely closed. The automatic calibration of the collar 4 is made by stop end formed by the peak 13 on the front wall of the valve head 21 body 1.

At the same time the rotary collar 4 with marked positions leans against the peak 13. By this is the position of maximum valve close on the rotary collar 4 maintained. After the valve head 21 installation, on the outer side of the valve head 21 and above the safety nut 9, two-part plastic housing 6 which prevents the simple disassembly of the valve head 21 as well as covers the safety nut 9 and improves the look of the valve, is fitted by push-in and lock joint.

Placed on the control board 7, there is a sensor which scans the position of the transmission 15 rack pinion 16. This sensor is after device installation fixed adjacently through the hole in the box 2 to the first wheel 16 labeled by scanning marks. It is favorable when the sensor is optoelectronic and the marks on the first wheel 16 are colored. The output of the sensor is processed by the control electronics. On the box 2, in the axis of the output pinion 18, is created the end stop on cylindric area with the thread-shaped edge. The respective peak serving as opposite end stop is located on the inner side of the outlet rack pinion 3. The main function of such end stop is, by its possible over-rotating, to limit the marginal inner space of the outlet rack pinion 3. The rotation is stopped with the assistance of the control electronics which evaluates the current voltage consumption of the electric engine.

Temperature modes of single devices to control the valves of the heating units (heating radiators, units) are set for individual areas by the software installed in the central control unit 23. These modes are sent precisely via cordless connection to the single thermostats 22 which provide cordless distribution to the valve heads 21.

### INDUSTRIAL APPLICABILITY

Industrial applicability is obvious. The presented invention is applicable in heating systems where there is, in terms of the program, the need to control the inner space temperature and to indicate the immediate heat output of the individual heating units on the control units or the central control panel.

### LIST OF RELATED SYMBOLS:

1 - body of the valve head
2 - gear box
3 - outlet rack pinion of the transmission
4 - collar
5 - transparent small window on the body 1
6 - two-part housing of the device safety nut 9
7 - board with the control electronics and radio receiver
8 - source (battery)
9 - safety nut of the device
10 - removable cover 1
11 - electric engine
12 - external threaded collar pin
13 - peak on the front side of the valve head body 1
14 - tip-up cover of the source 8
15 - transmission
16 - first wheel of the transmission 15
17 --electric engine pinion
18 - output transmission pinion
19 - axial peak on the external side of the outlet rack pinion 3
20 - radial peak of the rotary collar 4
21 - valve head
22 - cordless thermostats
23 - central control unit

## Claims

1. Heating unit valve control device comprising a valve head (21); the valve head (21) containing a body (1) with a control signal transmitter and receiver from a central control unit (23), particularly through cordless thermostats (22), whereby a configuration of electric engine (11) and a case (2) with transmission (15) is attached to the body (1), an outlet pinion (18) of said configuration meshing with the internal toothing of an outlet bowl-shaped rotating wheel pinion (3), with a support from the opposite outer side; said support crossing the body (1) through a threaded collar pin (12) situated in an adjusted to serve as a connection to the valve of the heating unit; being **characterized by** the fact that the outlet rotating wheel pinion (3) contains on its circumference a freely rotary placed collar (4) comprising radial pin (20) situated and adjusted to cooperate with an axial pin (19) configured from the outer front side of the outlet rotating wheel pinion (3), whereby the body (1) contains on its front inner side a pin (13) cooperating with the axial pin (19) of the outlet rotating wheel pinion (3), whereby the external circumference area of the collar (4) indicates the valve condition.

2. The device according to claim 1, **characterized by** the fact that the collar (4) has from the outer side with radial pin (20) a radial flanging, which creates the stop end for the outer front side of the outlet rotating wheel pinion (3) in a configured position in which is the outlet rotating wheel pinion (3) and collar (4) ensured against axial movement by shaped push-in and lock joint.

3. The device according to claims 1 or 2, **characterized by** the fact that by calibration, the angular position of the collar (4) against outlet rotating wheel pinion (3) corresponds to the assembling position of the collar (4) against outlet rotating wheel pinion (3) as well as to production and assembling tolerance of the valve head (21) of the heating unit.

4. The device according to any of the claims 1 to 3, **characterized by** the fact that the body (1) itself consists of a base with fixed tip-up cover (14) of a source (8) at the bottom part and a removable cover (10) on the back side; inside is situated radio transmitter and receiver on a board (7) with the control electronics where the basic part of the body (1) includes transparent small window (5) to visual checking of the valve status.

5. The device according to any of the claims 1 to 4, **characterized by** the fact that the radio transmitter and receiver aerial is created by a figure on printed circuit of the board with the control electronics (7).

6. The device according to any of the claims 1 to 5, **characterized by** the fact that a pinion (17) of the electric engine (11) meshes together into a rack pinion (16) made of material with the hardness less than 90 Shore A.

7. The device according to any of the claims 1 to 6, **characterized by** the fact that the material of the rack pinion (16) is rubber or plastic PUR or softened PVC kind.

8. The device according to any of the claims 6 to 7, **characterized by** the fact that the electric engine (11) is to the box (2) fixed by flexible ring, in which the electric engine (11) is put on to the box (2) of the transmission (15).

9. The device according to any of the claims 1 to 8, **characterized by** the fact that the electric engine (11) revolution is controlled by the electronics control board (7) mainly from the run-up until the starting torque.

10. The device according to any of the claims 1 to 9, **characterized by** the fact that on the board (7) an indicator of rack pinion's (16) position is placed and fixed, while this indicator is positioned against the hole in the gear box (2).

## Patentansprüche

1. Ventilsteuerung für Heizgeräte gebildet aus dem Ventilkopf (21), der von dem Gehäuse (1) mit Sender und Empfänger der Steuersignale aus der Zentralsteuerungseinheit (23) besonders durch drahtlose Thermostate (22), wo es am Gehäuse (1) die Elektromotor-Baugruppe (11), befestigt ist und aus dem Kasten (2) mit Getriebe (15), dessen Abgabetreibrad (18) mit der Innenverzahnung des Abgaberads (3) in Eingriff steht, wobei das schüsselförmige Zahnrad an der Rückseite von außen mittig mit einem durch die Gewindeöffnung am Gehäuse (1) durchgehenden Gewindebolzen (12) versehen ist, die Gewindeöffnung ist im diesen Bereich zum Anschluss am Heizkörperventil angepasst, das Gerät **dadurch gekennzeichnet, dass** das Abgaberad (3) am seinen Umfang einen gegen axiale Verschiebung gesicherten drehbar angeordneten Ring (4) besitzt. Der Ring (4) hat an seiner Außenseite einen radialen Vorsatz (20), der für die Zusammenwirkung mit axialem Vorsatz (19) des Zahnrads (3) angepasst ist, wobei der Vorsatz an der Zahnradaußenseite angeordnet ist, wo das Gehäuse (1) an seiner Vorderseite inwendig einen mit dem axialen Vorsatz (19) des Abgabezahnrads zusammenwirkenden Vorsatz (13) besitzt, wobei die Umfangsfläche des Rings (4) die Anzeige des Ventilöffnungsgrades trägt.

2. Ventilsteuerung für Heizgeräte nach Anspruch 1 **dadurch gekennzeichnet, dass** der Ring (4) von außen einen radialen Saum besitzt, aus dem ein radialer Vorsatz (20) hervorragt, wo der radialer Saum eine Anschlagfläche für die Außenstirnseite des Abgabezahnrads (3) im zusammengestellten Position bildet, in dieser Position sind der Abgabezahnrad (3) und der Ring (4) gegen axialer Verschiebung durch eine Profilrastverbindung verriegelt.

3. Ventilsteuerung für Heizgeräte nach Anspruch 1 oder 2 **dadurch gekennzeichnet, dass** der Verdrehungswinkel des Ringes (4) dem Abgabezahnrad (3) gegenüber beim Kalibrieren der Montageposition des Ringes (4) gegen das Abgabezahnrad (3) und den Produktions- und Einbautoleranzen des Kopfes (21) und des Ventils vom Heizkörper entspricht.

4. Ventilsteuerung für Heizgeräte nach einem beliebigem Anspruch von den 1 bis 3 **dadurch gekennzeichnet, dass** das Gehäuse (1) durch einen Grundteil gebildet wird, zu diesem ist von unten ein ausklappbarer Deckel (14) der Speisequelle (8) befestigt, und von hinten ist ein abnehmbarer Deckel (10) angebracht, im Innenraum sind der Funksender und -Funkempfänger auf der Platte (7) mit der Steuerelektronik platziert, wobei der Gehäusegrundteil (1) von oben mit einem Sichtfenster (5) zur Sichtkontrolle vom Öffnungsgrad des Ventils versehen ist.

5. Ventilsteuerung für Heizgeräte nach einem beliebigem Anspruch von den 1 bis 4 **dadurch gekennzeichnet, dass** die Antenne des Funksenders als auch -Empfängers durch ein Gebilde auf der Leiterplatte (7) der Steuerelektronik gebildet wird.

6. Ventilsteuerung für Heizgeräte nach einem beliebigem Anspruch von den 1 bis 5 **dadurch gekennzeichnet, dass** das Ritzel (17) vom Elektromotor (11) in Eingriff mit dem aus einem Werkstoff mit Härte kleiner als 90 Shore A hergestellten Zahnrad (16) steht.

7. Ventilsteuerung für Heizgeräte nach einem beliebigem Anspruch von den 1 bis 6 **dadurch gekennzeichnet, dass** der Zahnradwerkstoff (16) Gummi oder Plast Type EPA oder PUR oder Weich-PVC ist.

8. Ventilsteuerung für Heizgeräte nach Anspruch 6 oder 7 **dadurch gekennzeichnet, dass** der Elektromotor (11) am Kasten (2) vom Getriebe (15) über einen flexiblen Ring befestigt wird, über den der Elektromotor (11) am Kasten (2) vom Getriebe (15) angedrückt ist.

9. Ventilsteuerung für Heizgeräte nach einem beliebigem Anspruch von den 1 bis 8 **dadurch gekennzeichnet, dass** die Umdrehungen vom Elektromotor (11) besonders beim Anlauf durch die Steuerelektronik-Leiterplatte (7) zum fortlaufenden Eingriff geregelt werden.

10. Ventilsteuerung für Heizgeräte nach einem beliebigem Anspruch von den 1 bis 9 **dadurch gekennzeichnet, dass** der Kasten (2) eine Öffnung besitzt, durch die der Zahnradpositionssensor (16) hindurchgeht, wobei der Sensor anliegend an der Platte (7) befestigt ist.

## Revendications

1. Dispositif de commande de soupapes d'unités de chauffage, constitué d'une tête (21) de soupape qui comprend un corps (1) avec émetteur et récepteur des signaux de commande de l'unité de commande centrale (23) notamment au moyen de thermostats (22) sans fil, corps (1) sur lequel est monté un ensemble moteur électrique (11) et armoire (2) avec boîte de vitesses (15) dont le pignon de sortie (18) s'engage dans la denture interne de l'engrenage de sortie (3) en forme de godet muni côté extérieur d'un goujon fileté central (12) qui passe par une ouverture filetée dans le corps (1) ajusté à cet endroit pour la fixation de la soupape du corps de chauffe, est **caractérisé par le fait que** l'engrenage de sortie (3) est équipé d'une bague tournante (4) empêchant le glissement axial, ladite bague (4) ayant sur sa partie extérieure un arrêt radial (20) devant correspondre à l'arrêt axial (19) de l'engrenage de sortie (3) aménagé sur son côté extérieur frontal et où le corps (1) possède, côté intérieur, un arrêt (13) correspondant à l'arrêt axial (19) de l'engrenage de sortie (3), sachant que la surface de la circonférence extérieure de la bague (4) comporte un indicateur de degré d'ouverture de la soupape.

2. Dispositif selon l'exigence n° 1 est **caractérisé par le fait que** la bague (4) possède, de son côté extérieur, une bordure radiale d'où ressort l'arrêt radial (20), où la bordure radiale constitue une surface de butée pour le côté frontal de l'engrenage de sortie (3) en une position telle que l'engrenage de sortie (3) et la bague (4) sont assurés contre le glissement axial à l'aide d'un raccord à encliquetage.

3. Dispositif selon l'exigence n° 1 ou n° 2 est **caractérisé par le fait que** l'angle de tournage de la bague (4) par rapport à l'engrenage de sortie (3) lors du calibrage correspond à la position de montage de la bague (4) par rapport à l'engrenage de sortie (3) et aux tolérances de production et de montage de la tête (21) et de la soupape du corps de chauffe.

4. Dispositif selon l'une quelconque des exigences n° 1 à 3 est **caractérisé par le fait que** le corps (1) est composé d'une partie de base à laquelle est fixé, sous sa partie inférieure, le couvercle basculeur (14) de la source d'alimentation (8) et, dans sa partie arrière, un couvercle escamotable (10), qu'à l'intérieur un émetteur et un récepteur radio sont fixés sur une plaque (7) comportant l'électronique de commande, sachant que la partie de base du corps (1) est munie d'en haut d'une fenêtre transparente (5) servant au contrôle visuel de l'indicateur du degré d'ouverture de la soupape.

5. Dispositif selon l'une quelconque des exigences n° 1 à 4 est **caractérisé par le fait que** l'antenne de l'émetteur et du récepteur radio est constituée d'un motif situé sur le circuit imprimé de la plaque (7) comportant l'électronique de commande.

6. Dispositif selon l'une quelconque des exigences n° 1 à 5 est **caractérisé par le fait que** le pignon (17) du moteur électrique (11) s'entraîne dans la roue dentée (16) fabriquée en matériaux d'une dureté inférieure à 90 Shore 1.

7. Dispositif selon l'une quelconque des exigences n° 1 à 6 est **caractérisé par le fait que** le matériau de fabrication de la roue dentée (16) est du caoutchouc ou du plastique soit de type EPA, soit de type PUR, ou de type PVC ramolli.

8. Dispositif selon l'une quelconque des exigences n° 6 à 7 est **caractérisé par le fait que** le moteur électrique (11) est monté sur l'armoire (2) de la boîte de vitesses (15) à l'aide d'un anneau flexible par lequel le moteur électrique (11) est accolé à l'armoire (2) de la boîte de vitesses (15).

9. Dispositif selon l'une quelconque des exigences n° 1 à 8 est **caractérisé par le fait que**, notamment lors du démarrage, les tours du moteur électrique (11) sont réglés par la plaque comportant l'électronique de commande (7) de façon à ce que la vitesse d'entraînement soit progressive.

10. Dispositif selon l'une quelconque des exigences n° 1 à 9 est **caractérisé par le fait que** l'armoire (2) possède une ouverture à travers laquelle passe le capteur de position de la roue dentée (16) ; le capteur est fixé accolé à la planche (7).
